# EUROPÄISCHE PATENTSCHRIFT

(11) **EP 1 987 073 B1**
(45) Veröffentlichungstag und Bekanntmachung des Hinweises auf die Patenterteilung: **02.05.2018**
(21) Anmeldenummer: 07703347.0
(22) Anmeldetag: 08.02.2007
(51) Int. Cl.: C09D 175/04, C08G 18/08, C08G 18/62, C08G 18/66, C08G 18/79, C08G 18/12, C08G 18/40

(54) **WÄSSRIGE ZWEIKOMPONENTENSYSTEME, VERFAHREN ZU IHRER HERSTELLUNG UND IHRE VERWENDUNG**
AQUEUOUS TWO-COMPONENT SYSTEMS, PROCESS FOR THEIR PREPARATION AND THEIR USE
SYSTEME AQUEUX À DEUX COMPOSANTS, SON PROCEDE DE FABRICATION ET SON UTILISATION

(30) Priorität: 10.02.2006 DE 102006006100
(43) Veröffentlichungstag der Anmeldung: 05.11.2008
(73) Patentinhaber: BASF Coatings GmbH, 48165 Münster (DE)
(72) Erfinder: HUSTER, Inge, 48167 Münster (DE); LETTMANN, Bernhard, 48317 Drensteinfurt (DE); NIENHAUS, Egbert, 59387 Ascheberg (DE)
(74) Vertreter: BASF IP Association
(86) Internationale Anmeldenummer: PCT/EP2007/001070
(87) Internationale Veröffentlichungsnummer: WO 2007/090640

(56) Entgegenhaltungen:
- EP-A1- 0 805 171
- EP-A2- 0 899 282
- WO-A-00/59977
- WO-A-01/62814
- WO-A-01/64766
- WO-A-01/64770
- WO-A-95/35348
- US-A- 2 982 754

## Beschreibung

### Gebiet der Erfindung

Die vorliegende Erfindung betrifft neue, wässrige Zweikomponentensysteme. Außerdem betrifft die vorliegende Erfindung ein neues Verfahren zur Herstellung von wässrigen Zweikomponentensystemen. Nicht zuletzt betrifft die vorliegende Erfindung die Verwendung der neuen, wässrigen Zweikomponentensysteme und der nach dem neuen Verfahren hergestellten wässrigen Zweikomponentensysteme für die Herstellung neuer, wässriger, härtbarer Materialien.

### Stand der Technik

Aus der deutschen Patentanmeldung DE 199 14 899 A1 sind Mehrkomponentensysteme bekannt, die der Herstellung wässriger, härtbarer Materialien, insbesondere wässriger, Beschichtungsstoffe, dienen.

Die bekannten Mehrkomponentensysteme enthalten eine nichtwässrige Bindemittelkomponente (I), die ein nach einem mehrstufige Copolymerisationsverfahren hergestelltes (Meth)Acrylatcopolymerisat mit isocyanatreaktiven funktionellen Gruppen als Bindemittel und einen niedermolekularen und/oder oligomeren, im Wesentlichen unverzweigten, hydrophoben Polyester enthält.

Außerdem enthalten die bekannten Mehrkomponentensysteme eine nichtwässrige Vernetzungsmittelkomponente (II), die hydrophilierte Polyisocyanate enthalten kann.

Des Weiteren enthalten die bekannten Mehrkomponentensysteme eine wässrige Komponente (III), die mindestens ein wasserlösliches oder wasserdispergierbares Bindemittel, ausgewählt aus der Gruppe, bestehend aus (Meth)Acrylatcopolymerisaten, Polyesterharzen und Polyurethanen, enthalten kann.

Die aus den bekannten Mehrkomponentensystemen hergestellten wässrigen Beschichtungsstoffe, insbesondere Klarlacke, sind homogen und standsicher. Sie liefern Beschichtungen, insbesondere Klarlackierungen, die einen hohen Glanz, einen niedrigen Haze, einen sehr guten Verlauf, einen sehr guten optischen Eindruck (Appearance) und eine hohe Kochergrenze aufweisen.

Allerdings müssen bei der Herstellung der wässrigen Beschichtungsstoffe aus den bekannten Mehrkomponentensystemen noch immer Vorrichtungen wie Rührer verwendet werden, um rasch eine homogene Vermischung zu erzielen. In der betrieblichen Praxis eines Lackierbetriebs, insbesondere eines Lackierbetriebs für die Autoreparaturlackierung, ist es aber erforderlich, dass die wässrigen Beschichtungsstoffe auch in kleinen Mengen rasch und zuverlässig homogen durch Vermischen per Hand hergestellt werden können.

WO 01/62814 A und WO 01/64766 A betreffen Bindemittelgemische für wässrige Einbrennlacke bestehend aus speziellen in Wasser dispergierten Bindemitteln, (gegebenenfalls) in Wasser löslichen oder dispergierbaren

Polyhydroxylverbindungen, in Wasser löslichen oder dispergierbaren, blockierten Polyisocyanaten und/oder Aminoharzen und gegebenenfalls weiteren in Wasser löslichen oder dispergierbaren Substanzen.

WO 01/64770 A betrifft Bindemittelgemische für wässrige Einbrennlacke aus speziellen in Wasser dispergierten blockierten Polyisocyanaten, in Wasser löslichen oder dispergierbaren Polyhydroxylverbindungen, gegebenenfalls in Wasser löslichen oder dispergierbaren Vernetzerharzen und gegebenenfalls weiteren in Wasser löslichen oder dispergierbaren Substanzen.

### Aufgabe

Aufgabe der vorliegenden Erfindung ist es, neue wässrige Zweikomponentensysteme bereitzustellen, die sich in einfacher Weise und sehr gut reproduzierbar herstellen lassen.
Die neuen wässrigen Zweikomponentensysteme sollen es ermöglichen, neue, wässrige, härtbare Materialien, vorzugsweise wässrige, thermisch oder thermisch und mit aktinischer Strahlung härtbare Materialien, insbesondere wässrige, thermisch oder thermisch und mit aktinischer Strahlung härtbare Beschichtungsstoffe, Klebstoffe, Dichtungsmassen und Vorstufen für Formteile und Folien, rasch und in einfacher Weise durch Vermischen per Hand herzustellen.
Die neuen wässrigen härtbaren Materialien, vorzugsweise die neuen, wässrigen, thermisch oder thermisch und mit aktinischer Strahlung härtbaren Materialien, insbesondere die neuen, wässrigen, thermisch oder thermisch und mit aktinischer Strahlung härtbaren Beschichtungsstoffe, Klebstoffe, Dichtungsmassen und Vorstufen für Formteile und Folien, sollen neue, gehärtete, duroplastische Materialien, vorzugsweise neue, thermisch oder thermisch und mit aktinischer Strahlung gehärtete, duroplastische Materialien, insbesondere neue thermisch oder thermisch und mit aktinischer Strahlung gehärtete Beschichtungen, Klebschichten, Dichtungen, Formteile und Folien, liefern, die mindestens dasselbe vorteilhafte Eigenschaftsprofil aufweisen wie die gehärteten duroplastischen Materialien des Standes der Technik, wenn nicht gar dieses Eigenschaftsprofil übertreffen.

### Die erfindungsgemäße Lösung

Demgemäß wurden die neuen, wässrigen Zweikomponentensysteme gefunden, enthaltend als Komponente (I) eine wässrige Bindemittelkomponente, enthaltend
(A) mindestens eine Sekundärdispersion, enthaltend
   (A1) mindestens ein wasserlösliches oder wasserdispergierbares, durch eine mehrstufige Copolymerisation herstellbares (Meth)Acrylatcopolymerisat mit mindestens zwei isocyanatreaktiven funktionellen Gruppen und
   (A2) mindestens einen niedermolekularen und/oder oligomeren, unverzweigten, hydrophoben Polyester mit mindestens zwei Hydroxylgruppen im Molekül, einer OH-Zahl von 56 bis 500 mg KOH/g, einer Säurezahl <10 mg KOH/g und einem zahlenmittleren Molekulargewicht Mn von 300 bis 2.000 Dalton; und
(B) mindestens einen Zusatzstoff; sowie
   als Komponente (II) mindestens eine wasserfreie Vernetzungsmittelkomponente, enthaltend
(C) mindestens ein hydrophiliertes Polyisocyanat, das mindestens eine ionische Säuregruppe enthält.

Im Folgenden werden die neuen, wässrigen Zweikomponentensysteme als »erfindungsgemäße Systeme« bezeichnet.

Außerdem wurde das neue Verfahren zur Herstellung der erfindungsgemäßen Systeme gefunden, bei dem man
(1) zur Herstellung der Bindemittelkomponente(n) (I) mindestens ein wasserlösliches oder wasserdispergierbares, durch eine mehrstufige Copolymerisation herstellbares (Meth)Acrylatcopolymerisat (A1) mit mindestens zwei isocyanatreaktiven funktionellen Gruppen, mindestens einen niedermolekularen und/oder oligomeren, unverzweigten, hydrophoben Polyester (A2) mit mindestens zwei Hydroxylgruppen im Molekül, einer OH-Zahl von 56 bis 500 mg KOH/g, einer Säurezahl <10 mg KOH/g und einem zahlenmittleren Molekulargewicht Mn von 300 bis 2.000 Dalton; und mindestens einen Zusatzstoff (B) in Wasser dispergiert und
(2) zur Herstellung der Vernetzungsmittelkomponente(n) (II) mindestens ein hydrophiliertes Polyisocyanat (C), das mindestens eine ionische Säuregruppe enthält, mit mindestens einem inerten organischen Lösemittel (B) vermischt und die resultierende Mischung homogenisiert, wonach man
(3) die Bindemittelkomponente(n) (I) und die Vernetzungsmittelkomponente(n) (II) bis zur weiteren Verwendung getrennt voneinander lagert.
Im Folgenden wird das neue Verfahren zur Herstellung der erfindungsgemäßen Systeme als »erfindungsgemäßes Verfahren« bezeichnet.

Nicht zuletzt wurde die neue Verwendung der erfindungsgemäßen Systeme und der durch das erfindungsgemäße Verfahren erhaltenen erfindungsgemäßen Systeme für die Herstellung neuer, härtbarer Materialien gefunden, was im Folgenden als »erfindungsgemäße Verwendung« bezeichnet wird.

Weitere Erfindungsgegenstände gehen aus der Beschreibung hervor.

### Vorteile der Erfindung

Im Hinblick auf den Stand der Technik war es überraschend und für den Fachmann nicht vorhersehbar, dass die Aufgabe, die der vorliegenden Erfindung zugrunde lag, durch die erfindungsgemäßen Systeme, das erfindungsgemäße Verfahren und die erfindungsgemäße Verwendung gelöst werden konnte.

Insbesondere war es überraschend, dass sich die erfindungsgemäßen Systeme insbesondere durch das erfindungsgemäße Verfahren in einfacher Weise und sehr gut reproduzierbar herstellen ließen.

Die erfindungsgemäßen Systeme ermöglichten es, neue, wässrige, härtbare Materialien, vorzugsweise neue, wässrige, thermisch oder thermisch und mit aktinischer Strahlung härtbare Materialien, insbesondere wässrige, thermisch oder thermisch und mit aktinischer Strahlung härtbare Beschichtungsstoffe, Klebstoffe, Dichtungsmassen und Vorstufen für Formteile und Folien, rasch und in einfacher Weise durch Vermischen per Hand herzustellen.

Die erfindungsgemäßen wässrigen härtbaren Materialien, vorzugsweise die erfindungsgemäßen, wässrigen, thermisch oder thermisch und mit aktinischer Strahlung härtbaren Materialien, insbesondere die erfindungsgemäßen, wässrigen, thermisch oder thermisch und mit aktinischer Strahlung härtbaren Beschichtungsstoffe, Klebstoffe, Dichtungsmassen und Vorstufen für Formteile und Folien, lieferten neue, gehärtete, duroplastische Materialien, vorzugsweise neue, thermisch oder thermisch und mit aktinischer Strahlung gehärtete, duroplastische Materialien, insbesondere neue thermisch oder thermisch und mit aktinischer Strahlung gehärtete, duroplastische Beschichtungen, Klebschichten, Dichtungen, Formteile und Folien, die mindestens dasselbe vorteilhafte Eigenschaftsprofil aufwiesen wie die gehärteten, duroplastischen Materialien des Standes der Technik, wenn nicht gar dieses Eigenschaftsprofil signifikant übertrafen.

### Ausführliche Beschreibung der Erfindung

Das erfindungsgemäße System ist ein Zweikomponentensystem.

Das erfindungsgemäße System enthält mindestens eine, insbesondere eine, wässrige Bindemittelkomponente (I).

Die wässrige Bindemittelkomponente (I) enthält mindestens eine, insbesondere eine, Sekundärdispersion (A).

Die Sekundärdispersion (A) enthält mindestens ein, insbesondere ein, wasserlösliches oder wasserdispergierbares, durch eine mehrstufige, insbesondere zweistufige, Copolymerisation herstellbares (Meth)Acrylatcopolymerisat (A1) mit mindestens zwei isocyanatreaktiven funktionellen Gruppen.

Vorzugsweise werden die isocyanatreaktiven funktionellen Gruppen aus der Gruppe, bestehend aus Hydroxylgruppen, Thiolgruppen sowie primären und sekundären Aminogruppen, ausgewählt. Insbesondere werden Hydroxylgruppen verwendet.

Beispiele geeigneter, wasserlöslicher oder wasserdispergierbarer, durch eine mehrstufige, insbesondere zweistufige, Copolymerisation herstellbarer (Meth)Acrylatcopolymerisate (A1) sowie die geeigneten Verfahren zu ihrer Herstellung sind im Einzelnen aus
- der deutschen Patentanmeldung DE 199 14 899 A1, Seite 9, Zeilen 22 bis 25, i. V. m. Seite 9, Zeile 50, bis Seite 13, Zeile 33, und
- der internationalen Patentanmeldung 1997/14731, handschriftlich nummerierte Seite 4, Zeilen 1 bis 9, i. V. m. handschriftlich nummerierte Seite 12, Zeile 5, bis handschriftlich nummerierte Seite 22, Zeile 33,
bekannt.

Der Gehalt der wässrigen Sekundärdispersion (A) an (Meth)Acrylatcopolymerisat (A1) kann sehr breit variieren und daher hervorragend den Erfordernissen des Einzelfalls angepasst werden. Vorzugsweise liegt der Gehalt an (A1), jeweils bezogen auf (A), bei 10 bis 60 Gew.-%, bevorzugt 15 bis 55 Gew.-% und insbesondere 20 bis 50 Gew.-%.

Außerdem enthält die wässrige Sekundärdispersion (A) mindestens einen, insbesondere einen, niedermolekularen und/oder oligomeren, unverzweigten, hydrophoben Polyester (A2) mit mindestens zwei, vorzugsweise vier und insbesondere drei Hydroxylgruppen im Molekül, einer OH-Zahl von 56 bis 500, vorzugsweise 70 bis 450, bevorzugt 80 bis 400 und insbesondere 100 bis 300 mg KOH/g, einer Säurezahl <10 und vorzugsweise < 3 mg KOH/g und einem zahlenmittleren Molekulargewicht Mn von 300 bis 2.000 Dalton.

Vorzugsweise haben die niedermolekularen hydrophoben Polyester (A2) ein zahlenmittleres Molekulargewicht von 300 bis 1.000 Dalton, insbesondere 300 bis 700 Dalton.

Vorzugsweise haben die oligomeren hydrophoben Polyester (A2) ein zahlenmittleres Molekulargewicht von 400 bis 2.000 Dalton, bevorzugt 450 bis 1.500 Dalton, besonders bevorzugt 600 bis 1.200 Dalton und insbesondere 450 bis 1.000 Dalton.

Bevorzugt haben Polyester (A2) die allgemeine Formel F1:

**[R¹-CH(OH)-CH₂-OOC-]₂R** (F1),

worin die Variablen die folgende Bedeutung haben:
- R: substituierter oder unsubstituierter zweiwertiger C₁- bis C₂₀-Alkandiyl-, C₂- bis C₂₀-Alkendiyl-, C₄- bis C₂₀-Cycloalkandiyl- oder -Cycloalkendiyl-, C₆- bis C₁₂-Aryliden- oder zweiwertiger C₆- bis C₂₀-Arylalkyl-, -Arylalkenyl-, -Arylcycloalkyl-, oder - Arylcycloalkenylrest; oder substituierter oder unsubstituierter zweiwertiger aliphatischer, cycloaliphatischer, acyclischer oder cyclischer olefinisch ungesättigter, aromatischer, aliphatisch-aromatischer, cycloaliphatisch-aromatischer, acyclisch-ungesättigt-aromatischer oder cyclisch-ungesättigt-aromatischer Rest, welcher mindestens eine Carbonsäureestergruppe enthält;
- R¹: Wasserstoffatom oder einwertiger substituierter oder unsubstituierter C₁- bis C₂₀-Alkyl-, C₂- bis C₂₀-Alkenyl-, C₄-bis C₁₂-Cycloalkyl- oder -Cycloalkenyl-, C₆- bis C₁₂-Aryl- oder C₆- bis C₂₀-Arylalkyl-, -Arylalkenyl-, -Arylcycloalkyl-, -Arylcycloalkenyl-, - Alkylaryl-, -Alkenylaryl-, -Cycloalkylaryl-, -Cycloalkenylaryl-, -Alkylcycloalkyl-, - Alkylcycloalkenyl-, -Alkenylcycloalkyl-, -Alkenylcycloalkenyl-, -Cycloalkylalkyl-, - Cycloalkenylalkyl-, -Cycloalkylalkenyl- oder -Cycloalkenylalkenylrest.

Bevorzugt enthält der Rest R mindestens eine Hydroxylgruppe.

Der Rest R¹ kann mit mindestens einen Substituenten, ausgewählt aus der Gruppe, bestehend aus -F, -Cl, -Br, -I, -CN, -NO₂, -OH, -OR², -SH, -SR², -NH₂, -NHR², -N(NR²)₂ und/oder -OOC-R², worin die Variable R² die Bedeutung der Variablen R¹, ausgenommen das Wasserstoffatom, hat, substituiert sein.

Bevorzugt ist der Rest R¹ eine einfach substituierte Methylgruppe.

Besonders bevorzugt ist die Methylgruppe mit -OOC-R², worin der Rest R² einen verzweigten C₄- bis -C₁₂-Alkylrest bezeichnet, einfach substituiert.

Beispiele geeigneter hydrophober Polyester (A2) sowie die Verfahren zu ihrer Herstellung sind aus der deutschen Patentanmeldung DE 199 14 899 A1, Seite 3, Zeile 11, bis Seite 8, Zeile 32, im Einzelnen bekannt.

Der Gehalt der wässrigen Sekundärdispersion (A) an hydrophobem Polyester (A2) kann breit variieren, sodass er hervorragend an die Erfordernisse des Einzelfalls angepasst werden kann. Vorzugsweise liegt der Gehalt an (A2), jeweils bezogen auf (A), bei 1 bis 30 Gew.-%, bevorzugt 2 bis 25 Gew.-% und insbesondere 3 bis 20 Gew.-%.

In der wässrigen Sekundärdispersion (A) kann das Gewichtsverhältnis von (Meth)Acrylatcopolymerisat (A1) zu hydrophobem Polyester (A2) breit variieren und deshalb hervorragend an die Erfordernisse des Einzelfalls angepasst werden. Vorzugsweise liegt das Gewichtsverhältnis (A1) : (A2) bei in 7 : 1 bis 3 : 1, bevorzugt 6 : 1 bis 3,5 : 1 und insbesondere 5,5 : 1 bis 4 : 1.

Die wässrige Sekundärdispersion (A) enthält mindestens einen Zusatzstoff (B). Vorzugsweise enthält sie mindestens zwei Zusatzstoffe (B) und insbesondere mindestens drei Zusatzstoffe (B).

Vorzugsweise werden Zusatzstoffe (B) verwendet, wie sie üblicherweise in thermisch oder thermisch und mit aktinischer Strahlung härtbaren Materialien, bevorzugt wässrigen, härtbaren Materialien, besonders bevorzugt wässrigen Beschichtungsstoffen, Klebstoffen, Dichtungsmassen und Vorstufen für Formteile und Folien, ganz besonders bevorzugt wässrigen Beschichtungsstoffen, insbesondere wässrigen Füllern, Basislacken und Klarlacken, speziell wässrigen Klarlacken, verwendet werden.

Im Rahmen der vorliegenden Erfindung wird unter aktinischer Strahlung elektromagnetische Strahlung wie nahes Infrarot (NIR), sichtbares Licht, UV-Strahlung, Röntgenstrahlung und, Strahlung, insbesondere UV-Strahlung, und Korpuskularstrahlung wie Elektronenstrahlung, Betastrahlung, Alphastrahlung, Protonenstrahlung und Neutronenstrahlung, insbesondere Elektronenstrahlung, verstanden.

Vorzugsweise wird der Zusatzstoff (B) oder werden die Zusatzstoffe (B) aus der Gruppe, bestehend aus wasserlöslichen und wasserdispergierbaren, physikalisch, thermisch, mit aktinischer Strahlung und thermisch und mit aktinischer Strahlung härtbaren Bindemitteln, die von den vorstehend beschriebenen Bindemitteln (A1) verschieden sind, insbesondere Polyurethanen; Vernetzungsmitteln, die von den nachstehend beschriebenen Polyisocyanaten (C) verschieden sind und erst bei Temperaturen > 100°C mit den Bindemitteln reagieren, Neutralisationsmitteln; organischen Lösemitteln, insbesondere wassermischbaren organischen Lösemitteln; thermisch, mit aktinischer Strahlung und thermisch und mit aktinischer Strahlung härtbaren Reaktivverdünnern; transparenten und opaken, farbgebenden, effektgebenden und farb- und effektgebenden Pigmenten; transparenten und opaken Füllstoffen; Nanopartikeln; molekulardispers löslichen Farbstoffen; Lichtschutzmitteln; Antioxidantien; Neutralisationsmitteln; Netzmitteln; Emulgatoren; Slipadditiven; Polymerisationsinhibitoren; Katalysatoren für die thermische Vernetzung; thermolabilen radikalischen Initiatoren; Photoinitiatoren und -coinitiatoren; Haftvermittlern; Verlaufmitteln; filmbildenden Hilfsmitteln; Rheologiehilfsmitteln; Flammschutzmitteln; Korrosionsinhibitoren; Wachsen; Sikkativen; Bioziden und Mattierungsmitteln; ausgewählt.

Vorzugsweise werden sie in den üblichen und bekannten, wirksamen Mengen eingesetzt.

Beispiele geeigneter Zusatzstoffe (B) sind aus der deutschen Patentanmeldung DE 199 14 899 A1, Seite 14, Zeile 36, bis Seite 16, Zeile 63, Seite 17, Zeile 7, bis Seite 18, Zeile 13, Seite 18, Zeilen 16 bis 21, Seite 19, Zeilen 10 bis 22 und 30 bis 61, bekannt.

Ein Teil der Zusatzstoffe (B) kann als mindestens eine, insbesondere eine, separate Zusatzstoffkomponente (III) oder in mindestens einer, insbesondere einer, separaten Zusatzstoffkomponente (III) vorliegen.

Vorzugsweise liegen die Zusatzstoffe (B) in der mindestens einen, insbesondere einen, Komponente (I) und, sofern sie die Lagerstabilität der nachstehend beschriebenen Komponente (II) nicht durch unerwünschte Reaktionen verringern, auch in der Komponente (II) vor. Bevorzugt handelt es sich bei den Zusatzstoffen (B), die in der Komponente (II) vorliegen können, um inerte, insbesondere wassermischbare, organische Lösemittel (B).

Die Zusammensetzung der Komponente (I) kann breit variieren und so hervorragend den Erfordernissen des Einzelfalls angepasst werden.

Vorzugsweise liegt der Festkörpergehalt der Komponente (I) bei 10 bis 70 Gew.-%, bevorzugt 15 bis 65 Gew.-%, besonders bevorzugt 20 bis 60 Gew.-% und insbesondere 25 bis 55 Gew.-%, jeweils bezogen auf (I).

Hier und im Folgenden ist unter Feststoffgehalt die Summe aller Bestandteile einer Komponente oder eines härtbaren Materialien zu verstehen, die den Festkörper des gehärteten duroplastischen Materials mit aufbauen oder aufbauen.

Vorzugsweise enthält die Komponente (I), jeweils bezogen auf (I), 20 bis 90 Gew.-%, bevorzugt 25 bis 85 Gew.-%, besonders bevorzugt 30 bis 80 Gew.-% und insbesondere 35 bis 75 Gew.-% der wässrigen Sekundärdispersion (A).

Vorzugsweise enthält die Komponente (I), jeweils bezogen auf (I), 10 bis 80 Gew.-%, bevorzugt 15 bis 75 Gew.-%, besonders bevorzugt 20 bis 70 Gew.-% und insbesondere 25 bis 65 Gew.-% an Zusatzstoffen (B).

Der Herstellung der Komponente (I) erfolgt im Rahmen des erfindungsgemäßen Verfahrens vorzugsweise durch Vermischen der vorstehend beschriebenen Bestandteile (A) und (B) und Homogenisieren der resultierenden Mischung mit Hilfe geeigneter Mischaggregate wie Rührkessel, Inline-Dissolver, Rotor/Stator-Dispergatoren, Ultraturrax, Microfluidizer, Hochdruck-Homogenisatoren oder Düsenstrahl-Dispergatoren.

Das erfindungsgemäße System enthält des Weiteren mindestens eine, insbesondere eine, wasserfreie Vernetzungsmittelkomponente (II).

Die Vernetzungsmittelkomponente (II) enthält mindestens ein, insbesondere ein, hydrophiliertes Polyisocyanat (C), das mindestens eine ionische Säuregruppe enthält.

Das hydrophilierte Polyisocyanat (C) ist durch ionische hydrophile Säuregruppen, insbesondere ionische Sulfonsäuregruppen, hydrophiliert. Erfindungsgemäß ist die Hydrophilierung durch ionische Gruppen, insbesondere ionische Sulfonsäuregruppen, bevorzugt.

Beispiele geeigneter Polyisocyanate, die durch die vorstehenden ionischen Gruppen hydrophiliert sind und so die hydrophilierten Polyisocyanate (C) bilden, sind aus der deutschen Patentanmeldung DE 199 14 899 A1, Seite 18, Zeile 40, bis Seite 19, Zeile 9, bekannt.

Insbesondere werden hydrophilierte aliphatische Polyisocyanate (C) verwendet.

Der Gehalt der Vernetzungsmittelkomponente (II) an dem hydrophilierten Polyisocyanat (C) kann breit variieren und so den Erfordernissen des Einzelfalls hervorragend angepasst werden. Vorzugsweise liegt der Gehalt der Vernetzungsmittelkomponente (II) an hydrophiliertem Polyisocyanats (C), jeweils bezogen auf (II), bei 5 bis 90 Gew.-%, bevorzugt 10 bis 80 Gew.-%, besonders bevorzugt 12 bis 70 Gew.-% und insbesondere 15 bis 60 Gew.-%.

Vorzugsweise enthält die Vernetzungsmittelkomponente (II) noch mindestens ein, insbesondere ein, nicht hydrophiliertes, insbesondere hydrophobes, Polyisocyanat (D). Beispiele geeigneter Polyisocyanate (D) sind aus der deutschen Patentanmeldung DE 199 14 899 A1, Seite 18, Zeile 40, bis Seite 19, Zeile 9, bekannt. Es kommen auch Polyisocyanate, die neben den freien Isocyanatgruppen noch mit aktinischer Strahlung aktivierbare Gruppen enthalten, in Betracht. Beispiele geeigneter Polyisocyanate (D) sind aus der europäischen Patentanmeldung EP 0 928 800 A1 oder der deutschen Patentanmeldung DE 101 29 970 A1 bekannt.

Erfindungsgemäß ist es bevorzugt, wenn die hydrophilierten Polyisocyanate (C), die mindestens eine Säuregruppe enthalten, und die Polyisocyanate (D) dieselbe Grundstruktur aufweisen.

Der Gehalt der Vernetzungsmittelkomponente (II) an nicht hydrophiliertem Polyisocyanat (D) kann ebenfalls breit variieren und so den Erfordernissen des Einzelfalls angepasst werden. Vorzugsweise enthält die Vernetzungsmittelkomponente (II), jeweils bezogen auf (II), 10 bis 95 Gew.-%, bevorzugt 20 bis 90 Gew.-%, besonders bevorzugt 30 bis 90 Gew.-% und insbesondere 40 bis 85 Gew.-% an nicht hydrophiliertem Polyisocyanat (D).

Vorzugsweise enthält die Vernetzungsmittelkomponente (II) noch mindestens ein inertes organisches Lösemittel (B), d. h. ein organisches Lösemittel, das keine isocyanatreaktiven funktionellen Gruppen enthält.

Der Gehalt der Vernetzungsmittelkomponente (II) an organischen Lösemitteln (B) kann sehr breit variieren und so den Erfordernissen des Einzelfalls hervorragend angepasst werden. Im Allgemeinen wird nur so viel an organischen Lösemitteln (B) zugegeben, dass die Vernetzungsmittelkomponente (II) eine für die Vermischung per Hand vorteilhaft niedrige Viskosität aufweist. Bevorzugt enthält die Vernetzungsmittelkomponente (II) die organischen Lösemittel (B) in einer Menge von 5 bis 50 Gew.-%, besonders bevorzugt 10 bis 45 Gew.-% und insbesondere 15 bis 40 Gew.-%, jeweils bezogen auf (II).

Die Herstellung der Vernetzungsmittelkomponente (II) erfolgt im Rahmen des erfindungsgemäßen Verfahrens durch Vermischen ihrer vorstehend beschriebenen Bestandteile (C) und (B) sowie gegebenenfalls (D) und Homogenisieren der resultierenden Mischung, wobei die vorstehend beschriebenen Mischaggregate eingesetzt werden können.

Die resultierenden Komponenten (I) und (II) des erfindungsgemäßen Systems sowie gegebenenfalls weitere Komponenten (III) wie beispielsweise Zusatzstoffkomponenten (III) werden bis zu ihrer erfindungsgemäßen Verwendung getrennt voneinander gelagert. Wenn die Komponenten (I) und (II) sowie gegebenenfalls (III) Bestandteile enthalten, die mit aktinischer Strahlung aktivierbar sind, werden die betreffenden Komponenten unter Ausschluss von aktinischer Strahlung gelagert.

Im Rahmen der erfindungsgemäßen Verwendung dienen die erfindungsgemäßen Systeme der Herstellung neuer, wässriger, härtbarer Materialien, welche nachstehend als »erfindungsgemäße Materialien« bezeichnet werden.

Zur Herstellung eines erfindungsgemäßen Materials wird mindestens eine, insbesondere eine, Bindemittelkomponente (I) und mindestens eine, insbesondere eine, Vernetzungsmittelkomponente (II) sowie gegebenenfalls eine Zusatzstoffkomponente (III) gegebenenfalls unter Ausschluss von aktinischer Strahlung miteinander vermischt und die resultierende Mischung homogenisiert. Dabei erweist es sich als ein ganz besonderer Vorteil des erfindungsgemäßen Systems, dass seine Komponenten (I) und (II) sowie gegebenenfalls (III) problemlos und rasch per Hand miteinander vermischt werden können und die resultierende Mischung problemlos und rasch per Hand homogenisiert werden kann.

Bei der erfindungsgemäßen Verwendung kann das Gewichtsverhältnis von Komponente (I) zu Komponente (II) breit variieren und so hervorragend den Erfordernissen des Einzelfalls angepasst werden. Vorzugsweise wird das Gewichtsverhältnis (I) : (II) so eingestellt, dass das Äquivalentverhältnis von isocyanatreaktiven funktionellen Gruppen in (I) zu den Isocyanatgruppen in (II) bei 2 : 1 bis 1 : 3, bevorzugt 1,5 : 1 bis 1 : 2,5, besonders bevorzugt 1,2 : 1 bis 1 : 2 und insbesondere 1,1 : 1 bis 1 : 1,7 liegt.

Vorzugsweise werden die erfindungsgemäßen Materialien als neue, thermisch oder thermisch und mit aktinischer Strahlung härtbare, wässrige Beschichtungsstoffe, Klebstoffe, Dichtungsmassen und Vorstufen für Formteile und Folien verwendet.

Bevorzugt werden sie als erfindungsgemäße Beschichtungsstoffe verwendet.

Besonders bevorzugt sind die erfindungsgemäßen Beschichtungsstoffe neue, thermisch oder thermisch und mit aktinischer Strahlung härtbare, wässrige Primer, Füller, Basislacke, Unidecklacke und Klarlacke, insbesondere Klarlacke.

Die erfindungsgemäßen Materialien dienen im Rahmen der erfindungsgemäßen Verwendung der Herstellung der erfindungsgemäßen duroplastischen Materialien.

Vorzugsweise sind die erfindungsgemäßen duroplastischen Materialien neue Beschichtungen, Klebschichten, Dichtungen Formteilen und Folien, insbesondere neue Beschichtungen.

Bevorzugt sind die erfindungsgemäßen Beschichtungen neue Primerlackierungen, Füllerlackierungen oder Steinschlagschutzgrundierungen, Basislackierungen, Unidecklackierungen und Klarlackierungen, insbesondere Klarlackierungen.

Diese erfindungsgemäßen Lackierungen können einschichtig oder mehrschichtig sein. Ganz besonders bevorzugt sind sie mehrschichtig und können dabei mindestens zwei Lackierungen, insbesondere mindestens eine Elektrotauchlackierung, mindestens eine Füllerlackierung oder Steinschlagschutzgrundierung sowie mindestens eine Basislackierung und mindestens eine Klarlackierung oder mindestens eine Unidecklackierung umfassen.

Besonders bevorzugt umfassen die erfindungsgemäßen Mehrschichtlackierungen mindestens eine Basislackierung und mindestens eine Klarlackierung.

Von besonderem Vorteil ist es, die Klarlackierungen der erfindungsgemäßen Mehrschichtlackierungen aus den erfindungsgemäßen Klarlacken herzustellen.

Bei den erfindungsgemäßen Klarlackierungen handelt es sich um die äußerste Schicht der erfindungsgemäßen Mehrschichtlackierungen, die wesentlich den optischen Gesamteindruck (Appearance) bestimmt und die farb- und/oder effektgebenden Basislackierungen vor mechanischer und chemischer Schädigung und Schädigung durch Strahlung schützt. Die erfindungsgemäßen Klarlackierungen erweisen sich dabei
- als besonders unempfindlich gegenüber mechanischer Beanspruchung wie Zug, Dehnung, Schläge, Zerkratzen oder Abrieb,
- als besonders resistent gegenüber Feuchtigkeit (z. B. in Form von Wasserdampf), Lösemitteln und verdünnten Chemikalien und
- als besonders beständig gegenüber Umwelteinflüssen wie Temperaturenschwankungen und UV-Strahlung und weisen
- einen hohen Glanz und
- eine gute Haftung auf unterschiedlichsten Substraten auf.

Nicht zuletzt weisen sie nach ihrer Herstellung keine Vergilbung auf.

Je nach Verwendungszweck werden die erfindungsgemäßen Materialien auf temporäre oder permanente Substrate appliziert.

Vorzugsweise werden für die Herstellung von erfindungsgemäßen Folien und Formteilen übliche und bekannte temporäre Substrate verwendet, wie Metall- und Kunststoffbänder oder Hohlkörper aus Metall, Glas, Kunststoff, Holz oder Keramik, die leicht entfernt werden können, ohne dass die erfindungsgemäßen Folien und Formteile beschädigt werden.

Werden die erfindungsgemäßen Gemische für die Herstellung von Beschichtungen, Klebstoffen und Dichtungen verwendet, werden permanente Substrate eingesetzt.

Bevorzugt handelt es sich bei den Substraten um
- mit Muskelkraft, Heißluft oder Wind betriebenen Fortbewegungsmittel zu Lande, zu Wasser oder zur Luft, wie Fahrräder, Draisinen, Ruderboote, Segelboote, Heißluftballons, Gasballons oder Segelflugzeuge, sowie Teilen hiervon,
- mit Motorkraft betriebenen Fortbewegungsmittel zu Lande, zu Wasser oder zur Luft, wie Motorräder, Nutzfahrzeuge oder Kraftfahrzeuge, insbesondere PKW, Über- oder Unterwasserschiffe oder Flugzeuge, sowie Teile hiervon,
- stationäre Schwimmkörper, wie Bojen oder Teilen von Hafenanlagen
- Bauwerke im Innen- und Außenbereich,
- Türen, Fenstern und Möbel und
- Glashohlkörper,
- industrielle Kleinteile, wie Schrauben, Mutter, Randkappen oder Felgen,
- Behälter, wie Coils, Container oder Emballagen,
- elektrotechnische Bauteile, wie elektronische Wickelgüter, beispielsweise Spulen,
- optische Bauteile,
- mechanische Bauteile und
- weiße Ware, wie Haushaltsgeräte, Heizkessel und Radiatoren.

Die erfindungsgemäßen Folien und Formteile können ebenfalls als Substrate dienen.

Insbesondere handelt es sich bei den Substraten um Automobilkarosserien und Teile hiervon. Die erfindungsgemäßen Materialien bzw. die hieraus hergestellten erfindungsgemäßen Beschichtungen dienen dabei vorzugsweise der Erstlackierung der Automobilkarosserien (OEM) oder der Reparaturlackierung von erfindungsgemäßen und nicht erfindungsgemäßen Erstlackierungen. Die erfindungsgemäßen Erstlackierungen, insbesondere diejenigen, die eine erfindungsgemäße Klarlackierung enthalten, haben eine hervorragende Überlackierbarkeit. Die erfindungsgemäßen Reparaturlackierungen haften hervorragend auf den erfindungsgemäßen und nicht erfindungsgemäßen Erstlackierungen.

Methodisch weist die Applikation der erfindungsgemäßen Materialien keine Besonderheiten auf, sondern kann durch alle üblichen und bekannten, für das jeweilige Gemisch geeigneten Applikationsmethoden, wie z.B. Elektrotauchlackieren, Spritzen, Sprühen, Rakeln, Streichen, Gießen, Tauchen, Träufeln oder Walzen erfolgen. Vorzugsweise werden Spritzapplikationsmethoden angewandt.

Bei der Applikation empfiehlt es sich, unter Ausschluss von aktinischer Strahlung zu arbeiten, wenn die erfindungsgemäßen Materialien zusätzlich mit aktinischer Strahlung härtbar sind.

Für die Herstellung der erfindungsgemäßen Mehrschichtlackierungen können Nass-in-nass-Verfahren und Aufbauten angewandt werden, wie sie beispielsweise aus den deutschen Patentanmeldungen DE 199 30 067 A1, Seite 15, Zeile 23, bis Seite 16, Zeile 36, oder DE 199 40 855 A1, Spalte 30, Zeile 39, bis Spalte 31, Zeile 48, und Spalte 32, Zeilen 15 bis 29, bekannt sind. Es ist ein ganz wesentlicher Vorteil der erfindungsgemäßen Verwendung, dass im Grunde sämtliche Schichten der erfindungsgemäßen Mehrschichtlackierungen aus den erfindungsgemäßen Gemischen hergestellt werden können.

Die die thermische Härtung der erfindungsgemäßen Materialien erfolgt oder beginnt im Allgemeinen bereits bei Raumtemperatur.

Sofern die Härtung durch Erhitzen beschleunigt werden soll, empfiehlt es sich eine Ruhezeit oder Ablüftzeit einzuhalten. Die Ablüftzeit oder Ruhezeit kann eine Dauer von 30 s bis 2 h, vorzugsweise 1 min bis 1 h und insbesondere 1 bis 45 min haben. Die Ruhezeit dient beispielsweise zum Verlauf und zur Entgasung der applizierten erfindungsgemäßen Materialien und zum Verdunsten von flüchtigen Bestandteilen wie gegebenenfalls vorhandenem Lösemittel. Die Ablüftung kann durch eine erhöhte Temperatur und/oder durch eine reduzierte Luftfeuchtigkeit beschleunigt werden.

Die thermische Härtung der applizierten erfindungsgemäßen Materialien kann beispielsweise durch Einwirkung eines gasförmigen, flüssigen und/oder festen, heißen Mediums, wie heiße Luft, erhitztes Öl oder erhitzte Walzen, oder von Mikrowellenstrahlung, Infrarotlicht und/oder nahem Infrarotlicht (NIR), beschleunigt werden, vorzugsweise nach einer Ruhezeit oder Ablüftzeit. Bevorzugt erfolgt das Erhitzen in einem Umluftofen oder durch Bestrahlen mit IR- und/oder NIR-Lampen.

Die Härtung mit aktinischer Strahlung kann mit Hilfe der üblichen und bekannten Vorrichtungen und Verfahren, wie sie beispielsweise in der deutschen Patentanmeldung DE 198 18 735 A1, Spalte 10, Zeilen 31 bis 61, der deutschen Patentanmeldung DE 102 02 565 A1, Seite 9, Absatz [0092], bis Seite 10, Absatz [0106], der deutschen Patentanmeldung DE 103 16 890 A1, Seite 17, Absätze [0128] bis [0130], in der internationalen Patentanmeldung WO 94/11123, Seite 2, Zeilen 35, bis Seite 3, Zeile 6, Seite 3, Zeilen 10 bis 15, und Seite 8, Zeilen 1 bis 14, oder dem amerikanischen Patent US 6,743,466 B2, Spalte 6, Zeile 53, bis Spalte 7, Zeile 14, beschrieben werden, durchgeführt werden.

Die Härtung der erfindungsgemäßen Materialien kann auch unter weitgehendem oder vollständigem Ausschluss von Sauerstoff durchgeführt werden.

Im Rahmen der vorliegenden Erfindung gilt der Sauerstoff als weitgehend ausgeschlossen, wenn seine Konzentration an der Oberfläche der applizierten erfindungsgemäßen Gemische < 21 Vol.-%, vorzugsweise < 18 Vol.-%, bevorzugt < 16 Vol.-%, besonders bevorzugt 14 Vol.-%, ganz besonders bevorzugt 10 Vol.-% und insbesondere < 6 Vol.-% beträgt.

Im Rahmen der vorliegenden Erfindung gilt der Sauerstoff als vollständig ausgeschlossen, wenn seine Konzentration an der Oberfläche unter der Nachweisgrenze der üblichen und bekannten Nachweismethoden liegt.

Bevorzugt ist die Konzentration des Sauerstoffs ≥ 0,001 Vol.-%, besonders bevorzugt ≥ 0,01 Vol.-%, ganz besonders bevorzugt ≥ 0,1 Vol.-% und insbesondere ≥ 0,5 Vol.-%.

Die gewünschten Konzentrationen des Sauerstoffs können durch die in dem deutschen Patent DE 101 30 972 C1, Seite 6, Absätze [0047] bis [0052], beschriebenen Maßnahmen oder durch das Auflegen von Folien eingestellt werden.

Die resultierenden erfindungsgemäßen duroplastischen Materialien, bevorzugt die erfindungsgemäßen Folien, Formteile, Beschichtungen, Klebschichten und Dichtungen , besonders bevorzugt die erfindungsgemäßen Beschichtungen, ganz besonders bevorzugt die erfindungsgemäßen Primer-Lackierungen, Füllerlackierungen oder Steinschlagschutzgrundierungen, Basislackierungen, Unidecklackierungen und Klarlackierungen, insbesondere die erfindungsgemäßen Klarlackierungen, eignen sich hervorragend für das Beschichten, Verkleben, Abdichten, Umhüllen und Verpacken der vorstehend beschriebenen grundierten oder ungrundierten Substrate sowie dem Anbau an oder dem Einbau in die vorstehend beschriebenen grundierten oder ungrundierten Substrate.

Die resultierenden erfindungsgemäßen Substrate, die mit erfindungsgemäßen Beschichtungen beschichtet, mit erfindungsgemäßen Klebschichten verklebt, mit erfindungsgemäßen Dichtung abgedichtet und/oder mit erfindungsgemäßen Folien und/oder Formteilen umhüllt, verpackt und/oder verbunden sind, weisen hervorragende Gebrauchseigenschaften verbunden mit einer besonders langen Gebrauchsdauer auf.

### Beispiele

### Herstellbeispiel 1

### Die Herstellung eines hydrophoben Polyesters (A2)

In einem Stahlreaktor wurden 263 Gewichtsteile Hexahydrophthalsäureanhydrid und 114 Gewichtsteile Trimethylolpropan vorgelegt und auf 150°C erhitzt. Anschließend wurden zu der resultierenden Mischung während einer Stunde 423 Gewichtsteile Cardura® E10 (Versatic®-Säure-glycidylester) gleichmäßig zudosiert. Das resultierende Reaktionsgemisch wurde solange auf 150°C erhitzt, bis eine Säurezahl < 3 mg KOH/g erreicht war. Anschließend wurde der resultierende hydrophobe Polyester (A2) auf 100°C abgekühlt und mit Methylisobutylketon auf einen Festkörpergehalt von 80 Gew.-% angelöst. Die Viskosität der Anlösung lag bei 50 dPas (23°C).

### Herstellbeispiel 2

### Die Herstellung einer wässrigen Sekundärdispersion (A)

In einem Stahlreaktor, ausgerüstet mit Rührer, Rückflusskühler und zwei Zulaufgefäßen, wurden 127,5 Gewichtsteile Methylisobutylketon vorgelegt und unter Rühren auf 110°C erhitzt. Hierzu wurden bei dieser Temperatur gleichzeitig während drei Stunden aus dem ersten Zulaufgefäß eine Monomermischung aus 25,3 Gewichtsteilen Styrol, 29,4 Gewichtsteilen Methylmethacrylat, 16,9 Gewichtsteilen Laurylmethacrylat, 38 Gewichtsteilen Hydroxyethylmethacrylat und 33,7 Gewichtsteilen Butylmethacrylat und aus dem zweiten Zulaufgefäß eine Lösung von 8,7 Gewichtsteilen tert-Butylperoxyethylhexanoat in 19,8 Gewichtsteilen Methylisobutylketon gleichmäßig zudosiert. Anschließend wurde während einer Stunde bei 110°C nachpolymerisiert.

Danach wurden bei dieser Temperatur gleichzeitig beginnend während 2,75 Stunden aus dem ersten Zulaufgefäß eine Monomermischung aus 10,9 Gewichtsteilen Styrol, 12,6 Gewichtsteilen Methylmethacrylat, 7,2 Gewichtsteilen Laurylmethacrylat, 40,2 Gewichtsteilen Hydroxyethylmethacrylat, 14,5 Gewichtsteilen Butylmethacrylat und 12,2 Gewichtsteilen Acrylsäure und aus dem zweiten Zulaufgefäß während 3,5 Stunden eine Lösung von 5,8 Gewichtsteilen tert.- Butylperoxyethylhexanoat in 23 Gewichtsteilen Methylisobutylketon zudosiert. Das resultierende Reaktionsgemisch wurde während zwei Stunden bei 110°C nachpolymerisiert, und es resultierte eine Lösung des Methacrylatcopolymerisats (A1).

Zu der Lösung des Methacrylatcopolymerisats (A1) wurden 68,4 Gewichtsteile der Lösung des hydrophoben Polyesters (A2) des Herstellbeispiels 1, 6,7 Gewichtsteile Dimethylethanolamin und 11,5 Gewichtsteile Triethanolamin hinzu gegeben. Das resultierende Gemisch wurde bei 80°C in 110 Gewichtsteilen deionisiertem Wasser dispergiert. Die resultierende Dispersion wurde während zwei Stunden bei 80°C gehalten. Anschließend wurden 360 Gewichtsteile deionisiertes Wasser zugesetzt, und das Methylisobutylketon wurde im Vakuum abdestilliert.

Die resultierende Sekundärdispersion (A) wurde mit deionisiertem Wasser auf einen Festkörper von 40 Gew.-% eingestellt. Sie wies einen pH-Wert von 7,5 und eine Säurezahl von 39 mg KOH/g Festharz auf.

### Herstellbeispiel 3

### Die Herstellung einer wässrigen Polyurethanharzdispersion (B)

In einen Stahlreaktor wurden 297,2 Gewichtsteile Hydroxypivalinsäureneopentylglykolester, 32,8 Gewichtsteile Phthalsäureanhydrid, 5,7 Gewichtsteile 2 -Butyl-2-ethylpropandiol-1,3, 133,5 Gewichtsteile Neopentylglykol, 346,4 Gewichtsteile Isophthalsäure und 11,2 Gewichtsteile Cyclohexan (Schleppmittel) eingewogen. Die resultierende Mischung wurde unter Rühren erhitzt, wobei das Kondensationswasser kontinuierlich entfernt wurde, bis eine Säurezahl von 3,5 mg KOH/g erreicht war. Das resultierende Polyesterdiol wurde auf 60°C abgekühlt und mit Methylethylketon auf einen Festkörpergehalt von 80 Gew.-% angelöst.

In einem für die Polyurethanharzsynthese geeigneten Stahlreaktor wurden 264,7 Gewichtsteile der Polyesterdiol-Lösung, 2,3 Gewichtsteile 2-Butyl-2-ethylpropandiol-1,3, 24,4 Gewichtsteile Dimethylolpropionsäure und 112,4 Gewichtsteile m-Tetramethylxylylidendiisocyanat vorgelegt und unter Rühren auf 82°C erhitzt, bis ein konstanter Isocyanatgehalt erreicht war. Anschließend wurden 36,2 Gewichtsteile Trimethylolpropan hinzu gegeben, und das resultierende Reaktionsgemisch wurde solange erhitzt, bis keine Isocyanatgruppen mehr nachweisbar waren. Nach der Zugabe von 44,5 Gewichtsteilen Methylethylketon wurde das Polyurethanharz (B) mit 13 Gewichtsteilen Dimethylethanolamin neutralisiert und bei 60°C in 480 Gewichtsteilen deionisiertem Wasser dispergiert. Anschließend wurde das Methylethylketon im Vakuum abdestilliert.

Die resultierende sekundäre Polyurethanharzdispersion (B) wurde mit deionisiertem Wasser auf einen Festkörpergehalt von 40 Gew.-% eingestellt. Sie wies einen pH-Wert von 7,2 und eine Säurezahl von 30 mg KOH/g Festharz auf.

### Beispiel 1

### Die Herstellung eines Zweikomponentensystems

### 1.1 Die Herstellung einer Komponente (I)

Die Komponente (I) wurde durch Vermischen der folgenden Bestandteile in der angegebenen Reihenfolge und durch Homogenisieren der resultierenden Mischung hergestellt:
- 60 Gewichtsteile der wässrigen Sekundärdispersion (A) gemäß Herstellbeispiel 2,
- 25 Gewichtsteile der Polyurethanharzdispersion (B) gemäß Herstellbeispiel 3,
- 0,8 Gewichtsteile eines Verdickungsmittels (B) auf Polyurethanbasis (Dapral® 210T, 10-prozentig in deionisiertem Wasser),
- 2,5 Gewichtsteile Butylglykolacetat (B),
- 3,0 Gewichtsteile Butylglykol (B),
- 3,0 Gewichtsteile eines Netzmittels (B) (Deuterol® 201E),
- 0,3 Gewichtsteile eines Verlaufmittels (B) auf der Basis eines polyethermodifizierten Polydimethylsiloxans (Byk® 331),
- 0,2 Gewichtsteile eines Verlaufmittels auf der Basis eines Siloxan-Polyalkylenoxid-Copolymers (B) (Silwet® L 7604),
- 0,2 Gewichtsteile eines reversiblen Radikalfängers (B) (HALS; Tinuvin® 292),
- 0,2 Gewichtsteile eines UV-Absorbers (B) (Tinuvin® 384-2) und
- 4,8 Gewichtsteile deionisiertes Wasser.

Die resultierende Komponente (I) war lagerstabil und konnte problemlos transportiert werden.

### 1.2 Die Herstellung einer Komponente (II)

Die Komponente (II) wurde durch Vermischen der folgenden Bestandteile und Homogenisieren der resultierenden Mischung hergestellt:
- 32 Gewichtsteile eines hydrophoben Polyisocyanats (D) auf der Basis eines Hexamethylendiisocyanat-Trimeren (Desmodur® XP2410),
- 38 Gewichtsteile eines hydrophilierten Polyisocyanats (C) auf der Basis eines Hexamethylendiisocyanat-Trimeren (Bayhydur® XP2570) und
- 30 Gewichtsteile Butylglykolacetat (B).

Das Zweikomponentensystem war völlig lagerstabil und konnte problemlos transportiert werden.

### Beispiel 2

### Die Herstellung eines wässrigen Klarlacks

Der wässrige Klarlack wurde durch Vermischen per Hand von 100 Gewichtsteilen der Komponente (I) des Beispiels 1.1 mit 29 Gewichtsteilen der Komponente (II) des Beispiels 1.2 hergestellt. Der resultierende wässrige Klarlack war bereits nach kurzer Zeit homogen durchmischt. Der wurde durch Zugabe von 30 Gewichtsteilen deionisiertem Wasser auf Spritzviskosität eingestellt. Er wies eine praxisgerechte Verarbeitungszeit von mehreren Stunden auf.

### Beispiel 3

### Die Herstellung einer effektgebenden Mehrschichtlackierung

Mit einer Elektrotauchlackierung und einer Füllerlackierung beschichtete phosphatierte Stahlbleche wurden mit einem wässrigen Metalleffekt-Basislack gemäß der internationalen Patentanmeldung WO 1987/003829 beschichtet, so dass eine Trockenfilmschichtdicke von 12 bis 15 µm resultierte. Die Wasserbasislackschichten wurden während 5 Minuten bei Raumtemperatur und während 10 Minuten bei 60°C getrocknet.

Der Klarlack gemäß Beispiel 2 wurde in zwei Spritzgängen mit 4 Minuten Zwischenablüftzeit gleichmäßig auf die Wasserbasislackschichten appliziert, so dass eine Trockenfilmschichtdicke von 50 µm resultierte.

Zur Bestimmung der Kochergrenze wurde der Klarlack gemäß Beispiel 2 keilförmig auf die Wasserbasislackschichten appliziert.

Die resultierenden Klarlackschichten wurden während 10 Minuten bei Raumtemperatur abgelüftet und während 45 Minuten bei 60°C in einem Umluftofen getrocknet.

Die resultierenden Mehrschichtlackierungen, jeweils umfassend eine Elektrotauchlackierung, eine Füllerlackierung, eine Metallic-Basislackierung und eine Klarlackierung, wiesen die folgenden anwendungstechnischen Eigenschaften auf:

| | |
|---|---|
| Glanz (20°) nach DIN 67530: | 87 Einheiten; |
| Haze (20°) nach DIN 67530: | 11,4 Einheiten; |
| optischer Gesamteindruck (visuell): | Klar; |
| Benetzung der Basislackierung: | Gut; und |
| Kochergrenze: | 85 µm. |

## Patentansprüche

1. Wässrige Zweikomponentensysteme, enthaltend
als Komponente (I) mindestens eine wässrige Bindemittelkomponente, enthaltend
(A) mindestens eine Sekundärdispersion, enthaltend
(A1) mindestens ein wasserlösliches oder wasserdispergierbares, durch eine mehrstufige Copolymerisation herstellbares (Meth)Acrylatcopolymerisat mit mindestens zwei isocyanatreaktiven funktionellen Gruppen und
(A2) mindestens einen niedermolekularen und/oder oligomeren, unverzweigten, hydrophoben Polyester mit mindestens zwei Hydroxylgruppen im Molekül, einer OH-Zahl von 56 bis 500 mg KOH/g, einer Säurezahl <10 mg KOH/g und einem zahlenmittleren Molekulargewicht Mn von 300 bis 2.000 Dalton; und
(B) mindestens einen Zusatzstoff; sowie
als Komponente (II) mindestens eine wasserfreie Vernetzungsmittelkomponente, enthaltend
(C) mindestens ein hydrophiliertes Polyisocyanat, das mindestens eine ionische Säuregruppe enthält.

2. Wässrige Zweikomponentensysteme nach Anspruch 1, **dadurch gekennzeichnet, dass** die isocyanatreaktiven funktionellen Gruppen des (Meth)Acrylatcopolymerisats (A1) aus der Gruppe, bestehend aus Hydroxylgruppen, Thiolgruppen sowie primären und sekundären Aminogruppen, ausgewählt sind.

3. Wässrige Zweikomponentensysteme nach Anspruch 1 oder 2, **dadurch gekennzeichnet, dass** der Polyester (A2) die allgemeine Formel F1 aufweist
**[R¹-CH(OH)-CH₂-OOC-]₂R** (F1),
worin die Variablen die folgende Bedeutung haben:
R substituierter oder unsubstituierter zweiwertiger C₁- bis C₂₀-Alkandiyl-, C₂- bis C₂₀-Alkendiyl-, C₄- bis C₂₀-Cycloalkandiyl- oder -Cycloalkendiyl-, C₆- bis C₁₂-Aryliden- oder zweiwertiger C₆- bis C₂₀-Arylalkyl-, -Arylalkenyl-, -Arylcycloalkyl-, oder -Arylcycloalkenylrest; oder
substituierter oder unsubstituierter zweiwertiger aliphatischer, cycloaliphatischer, acyclischer oder cyclischer olefinisch ungesättigter, aromatischer, aliphatisch-aromatischer, cycloaliphatisch-aromatischer, acyclisch-ungesättigt-aromatischer oder cyclisch-ungesättigt-aromatischer Rest, welcher mindestens eine Carbonsäureestergruppe enthält;
R¹ Wasserstoffatom oder einwertiger substituierter oder unsubstituierter C₁- bis C₂₀-Alkyl-, C₂- bis C₂₀-Alkenyl-, C₄-bis C₁₂-Cycloalkyl- oder -Cycloalkenyl-, C₆-bis C₁₂-Aryl- oder C₆- bis C₂₀-Arylalkyl-, -Arylalkenyl-, -Arylcycloalkyl-, - Arylcycloalkenyl-, - Alkylaryl-, -Alkenylaryl-, -Cycloalkylaryl-, -Cycloalkenylaryl-, -Alkylcycloalkyl-, -Alkylcycloalkenyl-, -Alkenylcycloalkyl-, - Alkenylcycloalkenyl-, -Cycloalkylalkyl-, -Cycloalkenylalkyl-, -Cycloalkylalkenyl- oder -Cycloalkenylalkenylrest.

4. Wässrige Zweikomponentensysteme nach Anspruch 3, **dadurch gekennzeichnet, dass** der Rest R mindestens eine Hydroxylgruppe enthält.

5. Wässrige Zweikomponentensysteme nach Anspruch 3 oder 4, **dadurch gekennzeichnet, dass** der Rest R¹ mit mindestens einen Substituenten, ausgewählt aus der Gruppe, bestehend aus -F, -Cl, -Br, -I, -CN, -NO₂, -OH, -OR², -SH, -SR², - NH₂, -NHR², -N(NR²)₂ und/oder -OOC-R², worin die Variable R² die Bedeutung der Variablen R¹, ausgenommen das Wasserstoffatom, hat, substituiert ist.

6. Wässrige Zweikomponentensysteme nach einem der Ansprüche 3 bis 5, **dadurch gekennzeichnet, dass** der Rest R¹ eine einfach substitierte Methylgruppe ist.

7. Wässrige Zweikomponentensysteme nach Anspruch 6, **dadurch gekennzeichnet, dass** die Methylgruppe mit -OOC-R², worin der Rest R² einen verzweigten C₄- bis - C₁₂-Alkylrest bezeichnet, einfach substituiert ist.

8. Wässrige Zweikomponentensysteme nach einem der Ansprüche 1 bis 7, **dadurch gekennzeichnet, dass** der Zusatzstoff (B) aus der Gruppe, bestehend aus wasserlöslichen und wasserdispergierbaren, physikalisch, thermisch, mit aktinischer Strahlung und thermisch und mit aktinischer Strahlung härtbaren Bindemitteln, die von den Bindemitteln (A1) verschieden sind; Vernetzungsmitteln, die von den Polyisocyanaten (C) verschieden sind und erst bei Temperaturen > 100°C mit den Bindemitteln reagieren, Neutralisationsmitteln; organischen Lösemitteln; thermisch, mit aktinischer Strahlung und thermisch und mit aktinischer Strahlung härtbaren Reaktiwerdünnern; transparenten und opaken, farbgebenden, effektgebenden und farb- und effektgebenden Pigmenten; transparenten und opaken Füllstoffen; Nanopartikeln, molekulardispers löslichen Farbstoffen; Lichtschutzmitteln; Antioxidantien; Neutralisationsmitteln; Netzmitteln; Emulgatoren; Slipadditiven; Polymerisationsinhibitoren; Katalysatoren für die thermische Vernetzung; thermolabilen radikalischen Initiatoren; Photoinitiatoren und -coinitiatoren; Haftvermittlern; Verlaufmitteln; filmbildenden Hilfsmitteln; Rheologiehilfsmitteln; Flammschutzmitteln; Korrosionsinhibitoren; Wachsen; Sikkativen; Bioziden und Mattierungsmitteln; ausgewählt sind.

9. Wässrige Zweikomponentensysteme nach Anspruch 8, **dadurch gekennzeichnet, dass** die wasserlöslichen und wasserdispergierbaren, physikalisch, thermisch, mit aktinischer Strahlung und thermisch und mit aktinischer Strahlung härtbaren Bindemittel, die von den Bindemitteln (A1) verschieden sind, Polyurethane sind.

10. Wässrige Zweikomponentensysteme nach Anspruch 1, **dadurch gekennzeichnet, dass** die mindestens eine Säuregruppe des hydrophilierten Polyisocyanats (C) eine ionische Sulfonsäuregruppe ist.

11. Wässrige Zweikomponentensysteme nach einem der Ansprüche 1 bis 10, **dadurch gekennzeichnet, dass** die Vernetzungsmittelkomponente (II) mindestens ein inertes organisches Lösemittel (B) enthält.

12. Wässrige Zweikomponentensysteme nach einem der Ansprüche 1 bis 11, **dadurch gekennzeichnet, dass** die Vernetzungsmittelkomponente (II) mindestens ein hydrophobes Polyisocyanat (D) enthält.

13. Verfahren zur Herstellung wässriger Zweikomponentensysteme gemäß einem der Ansprüche 1 bis 12, **dadurch gekennzeichnet, dass** man
(1) zur Herstellung der Bindemittelkomponente(n) (I) mindestens ein wasserlösliches oder wasserdispergierbares, durch eine mehrstufige Copolymerisation herstellbares (Meth)Acrylatcopolymerisat (A1) mit mindestens zwei isocyanatreaktiven funktionellen Gruppen, mindestens einen niedermolekularen und/oder oligomeren, unverzweigten, hydrophoben Polyester (A2) mit mindestens zwei Hydroxylgruppen im Molekül, einer OH-Zahl von 56 bis 500 mg KOH/g, einer Säurezahl <10 mg KOH/g und einem zahlenmittleren Molekulargewicht Mn von 300 bis 2.000 Dalton; und mindestens einen Zusatzstoff (B) in Wasser dispergiert und
(2) zur Herstellung der Vernetzungsmittelkomponente(n) (II) mindestens ein hydrophiliertes Polyisocyanat (C), das mindestens eine ionische Säuregruppe enthält, mit mindestens einem inerten organischen Lösemittel (B) vermischt und die resultierende Mischung homogenisiert, wonach man
(3) die Bindemittelkomponente(n) (I) und die Vernetzungsmittelkomponente(n) (II) bis zur weiteren Verwendung getrennt voneinander lagert.

14. Verfahren nach Anspruch 13, **dadurch gekennzeichnet, dass** man zur Herstellung der Vernetzungsmittelkomponente(n) (II) noch mindestens ein hydrophobes Polyisocyanat (D) zusetzt.

15. Verwendung der wässrigen Zweikomponentensysteme gemäß einem der Ansprüche 1 bis 12 und der nach dem Verfahren gemäß Anspruch 13 oder 14 hergestellten, wässrigen Zweikomponentensysteme für die Herstellung wässriger, härtbarer Materialien.

16. Verwendung nach Anspruch 15, **dadurch gekennzeichnet, dass** die wässrigen, härtbaren Materialien thermisch oder thermisch und mit aktinischer Strahlung härtbar sind.

17. Verwendung nach Anspruch 16, **dadurch gekennzeichnet, dass** als aktinische Strahlung UV-Strahlung und/oder Elektronenstrahlung verwendet wird.

## Claims

1. Aqueous two-component systems comprising
as component (I) at least one aqueous binder component comprising
(A) at least one secondary dispersion comprising
(A1) at least one water-soluble or water-dispersible (meth)acrylate copolymer which can be prepared by a multistage copolymerization and has at least two isocyanate-reactive functional groups, and
(A2) at least one low molecular weight and/or oligomeric, unbranched, hydrophobic polyester having at least two hydroxyl groups in the molecule, an OH number of 56 to 500 mg KOH/g, an acid number <10 mg KOH/g, and a number-average molecular weight Mn of 300 to 2000 daltons; and
(B) at least one additive; and also
as component (II) at least one water-free crosslinking component comprising
(C) at least one hydrophilicized polyisocyanate which contains at least one ionic acid group.

2. Aqueous two-component systems according to Claim 1, **characterized in that** the isocyanate-reactive functional groups of the (meth)acrylate copolymer (A1) are selected from the group consisting of hydroxyl groups, thiol groups, and primary and secondary amino groups.

3. Aqueous two-component systems according to Claim 1 or 2, **characterized in that** the polyester (A2) has the general formula F1
**[R¹-CH(OH)-CH₂-OOC-]₂R** (F1),
in which the variables have the following definitions:
R is substituted or unsubstituted divalent C₁ to C₂₀ alkanediyl, C₂ to C₂₀ alkenediyl, C₄ to C₂₀ cycloalkanediyl or cycloalkenediyl, C₆ to C₁₂ arylidene or divalent C₆ to C₂₀ arylalkyl, arylalkenyl, arylcycloalkyl, or arylcycloalkenyl radical; or
substituted or unsubstituted divalent aliphatic, cycloaliphatic, acyclic or cyclic olefinically unsaturated, aromatic, aliphatic-aromatic, cycloaliphatic-aromatic, acyclically unsaturated-aromatic or cyclically unsaturated-aromatic radical which contains at least one carboxylic ester group;
R¹ is hydrogen atom or monovalent substituted or unsubstituted C₁ to C₂₀ alkyl, C₂ to C₂₀ alkenyl, C₄ to C₁₂ cycloalkyl or cycloalkenyl, C₆ to C₁₂ aryl or C₆ to C₂₀ arylalkyl, arylalkenyl, arylcycloalkyl, arylcycloalkenyl, alkylaryl, alkenylaryl, cycloalkylaryl, cycloalkenylaryl, alkylcycloalkyl, alkylcycloalkenyl, alkenylcycloalkyl, alkenylcycloalkenyl, cycloalkylalkyl, cycloalkenylalkyl, cycloalkylalkenyl or cycloalkenylalkenyl radical.

4. Aqueous two-component systems according to Claim 3, **characterized in that** the radical R contains at least one hydroxyl group.

5. Aqueous two-component systems according to Claim 3 or 4, **characterized in that** the radical R¹ is substituted by at least one substituent selected from the group consisting of -F, -Cl, -Br, -I, - CN, -NO₂, -OH, -OR², -SH, -SR², -NH₂, -NHR², -N(NR²)₂ and/or -OOC-R², in which the variable R² has the definition of the variables R¹ bar the hydrogen atom.

6. Aqueous two-component systems according to any one of Claims 3 to 5, **characterized in that** the radical R¹ is a monosubstituted methyl group.

7. Aqueous two-component systems according to Claim 6, **characterized in that** the methyl group is monosubstituted by -OOC-R², in which the radical R² is a branched C₄ to C₁₂ alkyl radical.

8. Aqueous two-component systems according to any one of Claims 1 to 7, **characterized in that** the additive (B) is selected from the group consisting of water-soluble and water-dispersible binders which are curable physically, thermally, with actinic radiation and thermally, and with actinic radiation and which are different from the binders (A1); crosslinking agents which are different from the polyisocyanates (C) and react with the binders only at temperatures > 100°C; neutralizing agents; organic solvents; reactive diluents which are curable thermally, with actinic radiation and thermally, and with actinic radiation; transparent and opaque pigments, color pigments, effect pigments, and color and effect pigments; transparent and opaque fillers; nanoparticles; molecularly dispersely soluble dyes; light stabilizers; antioxidants; neutralizing agents; wetting agents; emulsifiers; slip additives; polymerization inhibitors; thermal crosslinking catalysts; thermolabile free-radical initiators; photoinitiators and photocoinitiators; adhesion promoters; flow control agents; film formation auxiliaries; rheological assistants; flame retardants; corrosion inhibitors; waxes; siccatives; biocides; and matting agents.

9. Aqueous two-component systems according to Claim 8, **characterized in that** the water-soluble and water-dispersible binders which are curable physically, thermally, with actinic radiation and thermally, and with actinic radiation and which are different from the binders (A1) are polyurethanes.

10. Aqueous two-component systems according to Claim 1, **characterized in that** said at least one acid group of the hydrophilicized polyisocyanate (C) is an ionic sulfonic acid group.

11. Aqueous two-component systems according to any one of Claims 1 to 10, **characterized in that** the crosslinking component (II) comprises at least one inert organic solvent (B).

12. Aqueous two-component systems according to any one of Claims 1 to 11, **characterized in that** the crosslinking component (II) comprises at least one hydrophobic polyisocyanate (D).

13. Process for preparing aqueous two-component systems according to any one of Claims 1 to 12, **characterized in that**
(1) the binder component (s) (I) are prepared by dispersing in water at least one water-soluble or water-dispersible (meth)acrylate copolymer (A1) having at least two isocyanate-reactive functional groups and preparable by a multistage copolymerization, at least one low molecular weight and/or oligomeric, unbranched, hydrophobic polyester (A2) having at least two hydroxyl groups in the molecule, an OH number of 56 to 500 mg KOH/g, an acid number < 10 mg KOH/g, and a number-average molecular weight Mn of 300 to 2000 daltons, and at least one additive (B), and
(2) the crosslinking component(s) (II) are prepared by mixing at least one hydrophilicized polyisocyanate (C) which contains at least one ionic acid group with at least one inert organic solvent (B) and homogenizing the resulting mixture, and then
(3) the binder component(s) (I) and the crosslinking component(s) (II) are stored separately from one another until further use.

14. Process according to Claim 13, **characterized in that** for the preparation of the crosslinking component(s) (II) additionally at least one hydrophobic polyisocyanate (D) is added.

15. Use of the aqueous two-component systems according to any one of Claims 1 to 12 and of the aqueous two-component systems prepared by the process according to Claim 13 or 14 to produce aqueous curable materials.

16. Use according to Claim 15, **characterized in that** said aqueous curable materials are curable thermally or both thermally and with actinic radiation.

17. Use according to Claim 16, **characterized in that** said actinic radiation used is UV radiation and/or electron beams.

## Revendications

1. Systèmes bicomposants aqueux, contenant :
en tant que composant (I), au moins un composant liant aqueux, contenant :
(A) au moins une dispersion secondaire, contenant :
(A1) au moins un copolymère de (méth)acrylate soluble dans l'eau ou dispersible dans l'eau, contenant au moins deux groupes fonctionnels réactifs avec les isocyanates, pouvant être fabriqué par une copolymérisation à plusieurs étapes, et
(A2) au moins un polyester hydrophobe non ramifié, de faible poids moléculaire et/ou oligomère, contenant au moins deux groupes hydroxyle par molécule, ayant un indice OH de 56 à 500 mg KOH/g, un indice d'acidité < 10 mg KOH/g et un poids moléculaire moyen en nombre Mn de 300 à 2 000 Dalton ; et
(B) au moins un additif ; ainsi que en tant que composant (II), au moins un composant agent de réticulation anhydre, contenant :
(C) au moins un polyisocyanate hydrophilisé, qui contient au moins un groupe acide ionique.

2. Systèmes bicomposants aqueux selon la revendication 1, **caractérisés en ce que** les groupes fonctionnels réactifs avec les isocyanates du copolymère de (méth)acrylate (A1) sont choisis dans le groupe constitué par les groupes hydroxyle, les groupes thiols et les groupes amino primaires et secondaires.

3. Systèmes bicomposants aqueux selon la revendication 1 ou 2, **caractérisés en ce que** le polyester (A2) présente la formule générale F1 :
[R¹-CH(OH)-CH₂-OOC-]₂R (F1)
dans laquelle les variables ont la signification suivante :
R radical alcanediyle en C₁ à C₂₀, alcènediyle en C₂ à C₂₀, cycloalcanediyle ou cycloalcènediyle en C₄ à C₂₀, arylidène en C₆ à C₁₂ bivalent ou arylalkyle, arylalcényle, arylcycloalkyle ou arylcycloalcényle en C₆ à C₂₀ bivalent substitué ou non substitué ; ou
radical bivalent substitué ou non substitué, aliphatique, cycloaliphatique, acyclique ou cyclique oléfiniquement insaturé, aromatique, aliphatique-aromatique, cycloaliphatique-aromatique, acyclique insaturé aromatique ou cyclique insaturé aromatique, qui contient au moins un groupe ester d'acide carboxylique ;
R¹ atome d'hydrogène ou radical alkyle en C₁ à C₂₀, alcényle en C₂ à C₂₀, cycloalkyle ou cycloalcényle en C₄ à C₁₂, aryle en C₆ à C₁₂ ou arylalkyle, arylalcényle, arylcycloalkyle, arylcycloalcényle, alkylaryle, alcénylaryle, cycloalkylaryle, cycloalcénylaryle, alkylcycloalkyle, alkylcycloalcényle, alcénylcycloalkyle, alcénylcycloalcényle, cycloalkylalkyle, cycloalcénylalkyle, cycloalkylalcényle ou cycloalcénylalcényle en C₆ à C₂₀.

4. Systèmes bicomposants aqueux selon la revendication 3, **caractérisés en ce que** le radical R contient au moins un groupe hydroxyle.

5. Systèmes bicomposants aqueux selon la revendication 3 ou 4, **caractérisés en ce que** le radical R¹ est substitué avec au moins un substituant, choisi dans le groupe constitué par -F, -Cl, -Br, -I, -CN, -NO₂, -OH, -OR², - SH, -SR², -NH₂, -NHR², -N(NR²)₂ et/ou -OOC-R², la variable R² ayant la signification de la variable R¹, à l'exception de l'atome d'hydrogène.

6. Systèmes bicomposants aqueux selon l'une quelconque des revendications 3 à 5, **caractérisés en ce que** le radical R¹ est un groupe méthyle substitué une fois.

7. Systèmes bicomposants aqueux selon la revendication 6, **caractérisés en ce que** le groupe méthyle est substitué une fois avec -OOC-R², le radical R² désignant un radical alkyle ramifié en C₄ à C₁₂.

8. Systèmes bicomposants aqueux selon l'une quelconque des revendications 1 à 7, **caractérisés en ce que** l'additif (B) est choisi dans le groupe constitué par les liants solubles dans l'eau et dispersibles dans l'eau, durcissables par voie physique, par voie thermique, avec un rayonnement actinique et par voie thermique et avec un rayonnement actinique, qui sont différents des liants (A1) ; les agents de réticulation, qui sont différents des polyisocyanates (C) et ne réagissent avec les liants qu'à partir de températures > 100 °C, les agents de neutralisation ; les solvants organiques ; les diluants réactifs durcissables par voie thermique, avec un rayonnement actinique et par voie thermique et avec un rayonnement actinique ; les pigments transparents et opaques, colorants, à effet et colorants et à effet ; les charges transparentes et opaques ; les nanoparticules, les colorants solubles par dispersion moléculaire ; les agents photoprotecteurs ; les antioxydants, les agents de neutralisation ; les agents mouillants ; les émulsifiants ; les additifs de glissement ; les inhibiteurs de polymérisation ; les catalyseurs pour la réticulation thermique ; les initiateurs radicalaires thermolabiles ; les photoinitiateurs et co-initiateurs ; les promoteurs d'adhésion ; les agents d'écoulement ; les adjuvants filmogènes ; les adjuvants de rhéologie ; les agents ignifuges ; les inhibiteurs de corrosion ; les cires ; les siccatifs ; les biocides et les agents matifiants.

9. Systèmes bicomposants aqueux selon la revendication 8, **caractérisés en ce que** les liants solubles dans l'eau et dispersibles dans l'eau, durcissables par voie physique, par voie thermique, avec un rayonnement actinique et par voie thermique et avec un rayonnement actinique, qui sont différents des liants (A1), sont des polyuréthanes.

10. Systèmes bicomposants aqueux selon la revendication 1, **caractérisés en ce que** ledit au moins un groupe acide du polyisocyanate hydrophilisé (C) est un groupe acide sulfonique ionique.

11. Systèmes bicomposants aqueux selon l'une quelconque des revendications 1 à 10, **caractérisés en ce que** le composant agent de réticulation (II) contient au moins un solvant organique inerte (B).

12. Systèmes bicomposants aqueux selon l'une quelconque des revendications 1 à 11, **caractérisés en ce que** le composant agent de réticulation (II) contient au moins un polyisocyanate hydrophobe (D).

13. Procédé de fabrication de systèmes bicomposants aqueux selon l'une quelconque des revendications 1 à 12, **caractérisé en ce que**
(1) pour la fabrication du ou des composants liant (I), au moins un copolymère de (méth)acrylate (A1) soluble dans l'eau ou dispersible dans l'eau, contenant au moins deux groupes fonctionnels réactifs avec les isocyanates, pouvant être fabriqué par une copolymérisation à plusieurs étapes, au moins un polyester hydrophobe (A2) non ramifié, de faible poids moléculaire et/ou oligomère, contenant au moins deux groupes hydroxyle par molécule, ayant un indice OH de 56 à 500 mg KOH/g, un indice d'acidité < 10 mg KOH/g et un poids moléculaire moyen en nombre Mn de 300 à 2 000 Dalton ; et au moins un additif (B) sont dispersés dans de l'eau, et
(2) pour la fabrication du ou des composants agent de réticulation (II), au moins un polyisocyanate hydrophilisé (C), qui contient au moins un groupe acide ionique, est mélangé avec au moins un solvant organique inerte (B), et le mélange résultant est homogénéisé, puis
(3) le ou les composants liant (I) et le ou les composants agent de réticulation (II) sont stockés séparément les uns des autres jusqu'à l'utilisation ultérieure.

14. Procédé selon la revendication 13, **caractérisé en ce qu'**au moins un polyisocyanate hydrophobe (D) est également ajouté pour la fabrication du ou des composants agent de réticulation (II).

15. Utilisation des systèmes bicomposants aqueux selon l'une quelconque des revendications 1 à 12 ou des systèmes bicomposants aqueux fabriqués par le procédé selon la revendication 13 ou 14 pour la fabrication de matériaux durcissables aqueux.

16. Utilisation selon la revendication 15, **caractérisée en ce que** les matériaux durcissables aqueux sont durcissables par voie thermique ou par voie thermique et avec un rayonnement actinique.

17. Utilisation selon la revendication 16, **caractérisée en ce qu'**un rayonnement UV et/ou un faisceau d'électrons sont utilisés en tant que rayonnement actinique.
